(19) **Europäisches Patentamt**

**European Patent Office**

**Office européen des brevets**

(11) **EP 1 647 570 A1**

(12) **EUROPEAN PATENT APPLICATION**
published in accordance with Art. 158(3) EPC

(43) Date of publication:
19.04.2006 Bulletin 2006/16

(21) Application number: 04747938.1

(22) Date of filing: 16.07.2004

(51) Int Cl.:
*C08J 9/02* (1974.07)  *C08J 9/06* (1974.07)

(86) International application number:
PCT/JP2004/010575

(87) International publication number:
WO 2005/007730 (27.01.2005 Gazette 2005/04)

(84) Designated Contracting States:
DE FR GB

(30) Priority: 18.07.2003 JP 2003199515
18.07.2003 JP 2003199521

(71) Applicant: OJI PAPER CO., LTD.
Tokyo 104-0061 (JP)

(72) Inventors:
• TAKADA, Tomoyuki
Edogawa-ku, Tokyo 133-0063 (JP)
• KOJIMA, Junya
Chiba-shi, Chiba 261-0001 (JP)

(74) Representative: Poulin, Gérard et al
BREVALEX
3, rue du Docteur Lancereaux
75008 Paris (FR)

(54) **FOAMED PRODUCT IN A SHEET FORM AND METHOD FOR PRODUCTION THEREOF**

(57) The present invention discloses a foam sheet and its production process comprising the formation of a plurality of independent cells and/or a plurality of continuous cells. The foam sheet is produced from a foamable composition that contains an acid generator that generates an acid or a base generator that generates a base due to the action of an active energy beam and a compound that has a decomposing foamable functional group that decomposes and eliminates one or more types of low boiling point volatile substances by reacting with the acid or base.

EP 1 647 570 A1

**Description**

TECHNICAL FIELD

The present invention relates to a foam sheet in which a plurality of independent cells and/or continuous cells is formed and a production process thereof. A foam sheet of the present invention is useful as a foam sheet that is required to demonstrate characteristics such as heat insulation, low dielectric constant, light scattering, light reflection, screening, whiteness, opacity, wavelength-selective reflection and transmittance, light weight, buoyancy, soundproofing, sound absorption, shock absorption, cushioning, absorption, adsorption, occlusion, permeability and filtration.

A sheet referred to in the present invention includes thin sheets having a thickness of about 1 $\mu$m to 100 $\mu$m (so-called films) as well as sheets having a thickness of 0.1 mm to 10 mm.

The present application is based on Japanese Patent Applications Nos. 2003-199515 and 2003-199521, the contents of which are incorporated herein by reference.

BACKGROUND ART

Foam:

Although commonly used foams are predominantly composed of organic materials in the manner of urethane foam, Styrofoam and polyethylene foam, others have been reported that are composed of inorganic materials such as porous ceramics and porous glass. Many foams composed of organic materials are plastic foams based on polymer materials, are liquids at the time of foaming of the polymer materials, and utilize the characteristic of having suitable viscosity (see, for example, "Technologies and Application Deployments of Foams and Porous Body (Toray Research Center, 1996)" or "Resin Foam Forming Technology (Technical Information Institute, 2001)").

Examples of the characteristics of foams produced according to various methods in the case of having independent cells include a heat insulating function, shock absorption and cushioning functions, light weight and buoyancy functions, a vibration absorbing function, and the like. These useful characteristics are utilized in a wide range of fields such as refrigerator and construction materials, food trays, thermal recording paper, packaging materials, surfboards and acoustic instruments. Moreover, when a foam has continuous cells, the surface area thereof increases considerably, and thereby it is able to demonstrate functions such as adsorption and occlusion functions, loading function, catalytic function and permeation and filtration functions on gas and liquid materials, and so is used for home sponges, medical separation membranes and so on.

Foaming Methods:

Although the majority of typical processes for producing plastic foams involve the addition of a foaming agent to a polymer material, other processes are also used, such as a process that utilizes internal separation generated by drawing treatment (see, for example, Japanese Unexamined Patent Application, First Publication No. H11-238112) and a process that utilizes phase separation generated from differences in crosslinking density of polymer materials (see, for example, Published Japanese translation No. H10-504852 of PCT). There are an extremely large number of reports describing processes using foaming agents, and these are broadly classified into chemical foaming agents and physical foaming agents.

Chemical Foaming Agents:

Known examples of the chemical foaming agents include azo-based compounds represented by azo-dicarbon amide and azo-bis-isobutyronitrile, and sulfonyl hydrazide-based compounds represented by p,p'-oxy-bis-benzene sulfonyl hydrazide. These are organic compounds that generate one or more types of gases such as nitrogen or carbon dioxide as a result of undergoing thermal decomposition. These chemical foaming agents can be kneaded or dissolved in a polymer softened at a temperature equal to or lower than the decomposition temperature thereof followed by foaming by heating to a temperature equal to or higher than the decomposition temperature thereof, and are widely used practically (see, for example, Japanese Unexamined Patent Application, First Publication No. H5-212811, Japanese Unexamined Patent Application, First Publication No. H6-126851, Japanese Unexamined Patent Application, First Publication No. H6-145400 or Japanese Unexamined Patent Application, First Publication No. H9-132661). These chemical foaming agents are also used for foaming in combination with foaming assistants, crosslinking agents, stabilizers, or so forth as necessary.

In addition, organic compounds that generate a gas in the polymerization process are also included in the chemical foaming agents, a typical example of which is polyurethane foam. Polyurethane is a polymer of a polyole (which is an oligomer having two or more alcoholic hydroxyl groups in the form of -OH groups) and a polyisocyanate (which has two or more isocyanate groups in the form of -NCO groups in its molecule), and forms a foam by generating $CO_2$ gas in the polymerization reaction process (see, for example, Japanese Unexamined Patent Application, First Publication No. H7-258451).

Physical Foaming Agents:

Examples of the physical foaming agents include low boiling point volatile substances, volatile saturated hydrocarbon-based substances such as, for example, butane and pentane, and volatile fluorohydrocarbon-based substances such as, for example, fluoroethane. As the physical foaming agents, many low boiling point volatile substances are used, which are liquid at normal temperatures and become a gas as a result of volatilizing at 50 to 100°C, and are able to form a foam by being impregnated into a polymer material at a temperature lower than the boiling point thereof and then being heated to a temperature equal to or higher than the boiling point of the physical foaming agent (see, for example, Japanese Unexamined Patent Application, First Publication No. H6-107842 or Japanese Unexamined Patent Application, First Publication No. H6-254982). In addition, capsular foaming agents are known that are produced by using a thermoplastic polymer material for the outer shell thereof and sealing a low boiling point volatile substance inside (see, for example, Japanese Unexamined Patent Application, First Publication No. H7-173320 or Japanese Unexamined Patent Application, First Publication No. 2000-024488).

In addition, inert gases such as carbon dioxide or nitrogen, which are in a gaseous state at normal temperature and pressure, can also be used as physical foaming agents. In this case, after dissolving the inert gas in its gaseous state in a polymer material under molten conditions that have been controlled to a suitable pressure and temperature, the mixture is exposed to normal temperature and normal pressure, which causes the liquid phase substance to vaporize rapidly and expand to obtain a foam (see, for example, Japanese Unexamined Patent Application, First Publication No. H5-230259, Japanese Unexamined Patent Application, First Publication No. H7-196835 or Japanese Unexamined Patent Application, First Publication No. H7-330940).

Problems with Foams:

Batch type, extrusion type and injection type forming processes are used in the forming of plastic foams similar to ordinary plastics, and foamed plastic materials having various shapes and sizes such as blocks, pellets and sheets are commercially available. In recent years, there has been an increasingly strong demand for a reduced size and weight of next-generation materials in numerous fields, as is exemplified by the fierce competition to reduce the weight and size of cell phones and personal computers. There has been a similar growing need for reduced thickness in the field of foams, resulting in a demand for thin foams and foaming processes that allow the production of thin products. However, it has been extremely difficult to produce thin foams with conventional forming processes.

Since it is impossible to produce a foam that is thinner than the diameter of its cells, it is necessary to reduce cell diameter in order to allow the obtaining of thin foams. An example of a foam having a small cell diameter was proposed by N.P. Suh et al. at the Massachusetts Institute of Technology. This foam is a material referred to as a microcellular plastic, and is characterized by having a cell diameter of 0.1 to 10 $\mu$m and a cell density of $10^9$ to $10^{15}$ cells/cm$^3$ (see, for example, US Patent No. 4473665). This microcellular plastic is obtained by impregnating and saturating plastic with an inert gas such as carbon dioxide or nitrogen, which is a physical foaming agent, to a supersaturated state at a high pressure or in a supercritical state, followed by reducing the pressure or heating this gas-supersaturated plastic. In this process, typically, the larger the amount of impregnated inert gas, the smaller the cell diameter and the greater the cell density.

One of the shortcomings of ordinary plastic foams is the decrease in dynamic strength. The main cause of this phenomenon is the cells resulting in the formation of internal defects in the material itself. This tends to lead to inadequate durability and crack resistance. In the field of thermal recording materials, for example, the use of a foam sheet in which a support of a recording material has been imparted with a heat insulating function makes it possible to inhibit the loss of thermal energy required when recording an image, thereby greatly contributing to improving sensitivity. However, foam sheets have problems of susceptibility to scratches on the surface of recording materials due to their low surface hardness as well as susceptibility to bending and breaking. In order to solve these problems, decreases in foam dynamic strength are said to be able to be inhibited by reducing cell diameter.

Although it is said that reducing the cell diameter will allow the production of thin foams and foam characteristics that were unable to be achieved in the past, a process has yet to be established that is suitable for these microcellular foams. In the foaming method proposed by Suh et al. mentioned above, although the cell diameter can be certainly reduced and the cell density can be increased by increasing the amount of impregnated inert gas, these result in the problem of requiring a long period of time for the impregnated inert gas amount to reach saturation. For example, it has been reported that several days are required to impregnate carbon dioxide into polyethylene terephthalate to saturation, thus causing problems in terms of poor production efficiency. In addition, since a pressure reduction step is required to form cell nuclei, a phenomenon of so-called "outgassing" is known to occur in which a portion of the gas impregnated into the plastic under high pressure is released from the surface of the plastic before foaming. Since the effects of outgassing increase as the thickness of the forming decreases, defective foaming is often caused when the thickness of the form is 50 μm or less. Foaming processes that utilize impregnation of an inert gas are faced with a dilemma stemming from the basic principle of these methods in which easily impregnated materials are also susceptible to outgassing, thereby making it extremely difficult to produce microcellular thin foams, and creating the need for the appearance of such foams.

However, in the case of a foam being composed of a polymer material having high moisture absorption and water absorption, when allowed to stand in an environment at a high humidity, the foam gradually adsorbs and becomes impregnated with moisture causing it to soften. Consequently, there is increased susceptibility to changes in foam dimensions (elongation or contraction) and loss of foam structure (porous structure). These foams have inadequate foam characteristics which places restrictions on the environmental conditions under which they can be used while also making it difficult to deploy these films in applications. Thus, it is important to improve the moisture-resistant storage properties of foams, and numerous methods for solving this problem have been reported. One example involves a method in which moisture resistance is improved by spraying in order to make hydrophobic fine particles be adsorbed on the foam surface (physical hydrophobic treatment) (see, for example, Japanese Unexamined Patent Application, First Publication No. 2001-92467). In addition, there is also a chemical method that improves moisture resistance by reacting a compound having hydrophobic functional groups with a hydrophilic porous body in the form of an aerogel (chemical hydrophobic treatment) (see, for example, Japanese Unexamined Patent Application, First Publication No. 2000-264620).

Light Reflectors:

In recent years, light reflectors have come to be used in a wide range of fields, and are used as light reflecting members of, for example, backlighting units of liquid crystal displays, internal-illuminating lighting fixtures, internal-illuminating electric signboards, light boxes, projecting screens, medical X-ray observation panels, photocopiers, projector-type displays, facsimiles and electronic blackboards. Liquid crystal displays in particular are widely used as the displays of electronic devices such as televisions, personal computers, word processors, cell phones, PDA, digital cameras, video cameras and various types of gaming machines, and are being required to offer a thin design, light weight, reduced power consumption and improved display quality. In order to respond to the need for a thin design in particular, it is essential to supply as much luminous energy in a backlight as possible, the backlight being used for a liquid crystal display, to a liquid crystal unit.

Light Reflectors for Liquid Crystal Backlighting:

There are two types of backlighting units used in liquid crystal displays, that is, a directly-below type in which a light source is placed directly below the liquid crystal unit, and an edge-lighting type in which a light source is placed to the side of a transparent light guide panel, the latter type being suitable for reducing the thickness. In this case, light reflectors are mainly disposed at two locations, namely, in a lamp holder and below an light guide panel. Although a mechanism is employed in which luminous energy from the light source is transmitted to the liquid crystal unit after passing through the light guide panel from the lamp holder, a portion of the luminous energy is transmitted to the liquid crystal unit after being reflected by light reflecting films in the lamp holder and below the light guide panel. Thus, in order to efficiently transmit luminous energy supplied from the backlighting unit to the liquid crystal unit, it is necessary to increase the reflection efficiency of the light reflecting films. However, the light reflectors are also required to be thinner accompanying reduced thickness of liquid crystal displays, which tends to decrease the reflection efficiency. In addition, since lamps installed on the sides are also required to be narrower, the ease of incorporating into the device, productivity and formability are also important in addition to reducing the thickness of the light reflectors.

Conventional Light Reflectors:

Aluminum sheets (Japanese Unexamined Patent Application, First Publication No. S62-286019), metal sheets of aluminum or other metal having a thin film layer composed primarily of silver (Japanese Unexamined Utility Model Application, First Publication No. H4-22755), or metal sheets coated with white pigment (Japanese Unexamined Patent Application, First Publication No. H2-13925) have been used as light reflectors in the prior art. However, since these light reflectors generate leakage current caused by induction current from the light source due to their low electrical resistance, the amount of current used to emit light decreases resulting in the problem of low emission efficiency. Highly insulating foam resin sheets have been used in recent years in order to prevent this leakage current. Since foam resins also contain an air layer having a different refractive index in the resin, they have satisfactory light scattering efficiency which leads to improved reflection efficiency. For example, polyester sheets that contain microcellular foams have been disclosed (Japanese Unexamined Patent Application, First Publication No. H4-239540, Japanese Unexamined Patent Application, First Publication No. 2002-98811, Japanese Unexamined Patent Application, First Publication No. 2002-71913). In these polyester sheets, light is scattered and reflected by voids formed by drawing the resin sheet (draw-foaming). At present, although a white foam polyester film having a thickness of 188 $\mu$m is used as a light reflector of a backlighting unit (manufactured by Toray Industries, Inc., under the trade name of E60), this thickness prevents the backlighting unit from accommodating the need for reduced thickness. In addition, although there is a need for next-generation, thin light reflecting sheets having a thickness of 100 $\mu$m or less, decreasing thickness any further will make it difficult to reduce void diameter. Moreover, light reflection at the interface between the PET and voids is inadequate, thereby resulting in the problem of decreased reflection efficiency. Therefore, light reflecting films are used that have been imparted with greater reflection efficiency by adding a pigment having a higher refractive index than a resin as in thermoplastic resin sheets of polyesters and polyolefins containing an inorganic filler (Japanese Unexamined Patent Application, First Publication No. H7-287110, Japanese Unexamined Patent Application, First Publication No. 2002-333511). However, since the pigment has a higher specific gravity than the resin, the addition of the pigment caused the problem of impairing efforts to reduce weight. Moreover, the addition of the pigment also worsened dynamic strength and the drawability of the resin (decreased drawing viscosity), which causes the film to break during draw-foaming and results in poor formability and productivity. In addition, although these films are incorporated in backlighting units, their excessive rigidity makes workability difficult during incorporation in the lamp holder. On the other hand, a method has been reported for improving workability by producing a thin light reflector by a coating method. In this method, the resulting light reflector has a coating liquid, in which hollow particles are mixed into a (meth) acrylic acid ester copolymer resin (Japanese Unexamined Patent Application, First Publication No. H9-63329), coated onto a support. However, when the number of hollow elements added in the form of the hollow particles is increased to inhibit decreases in reflection efficiency caused by the use of a thin light reflector, problems are caused in which cracks are formed in the coated layer resulting in poor film formation and the resulting film is extremely brittle. Consequently, it is difficult to obtain a thin light reflector having high reflection efficiency.

DISCLOSURE OF THE INVENTION

The present invention provides a foam sheet that has microcells and can easily be made to be thin and have multiple layers, and a production process thereof. In addition, the present invention allows the production of a light reflector that has microcells, is thin and has high reflection efficiency as well as satisfactory workability, productivity and formability.

In order to solve the aforementioned problems, the present invention employs the constitution described below. Namely, a first embodiment of the present invention is a production process of a foam sheet having a step in which a foamable composition, containing an acid generator that generates acid or a base generator that generates a base due to the action of an active energy beam, and containing a compound that has a decomposing foamable functional group that decomposes and eliminates one or more types of low boiling point volatile substances by reacting with acid or base, is formed into the shape of a sheet, and a step in which the sheet is subsequently irradiated with an active energy beam.

A second embodiment of the present invention is a production process of a foam sheet according to the first embodiment wherein, a foamable composition, containing an acid generator that generates acid or a base generator that generates base due to the action of an active energy beam, and containing a compound that has a decomposing foamable functional group that decomposes and eliminates one or more types of low boiling point volatile substances by reacting with acid or base, is formed into the shape of a sheet, and then foamed by irradiating with an active energy beam and heating.

A third embodiment of the present invention is a production process of a foam sheet according to the first embodiment wherein, a foamable composition, containing an acid generator that generates acid or a base generator that generates base due to the action of an active energy beam, and containing a compound that has a decomposing foamable functional group that decomposes and eliminates one or more types of low boiling point volatile substances by reacting with acid or base, is formed into the shape of a sheet, and the foamable composition formed in the shape of a sheet is foamed by heating as necessary and then irradiating with an active energy beam.

A fourth embodiment of the present invention is a production process of a foam sheet according to the first embodiment wherein, the step in which the foamable composition is formed into the shape of a sheet is an extrusion forming step.

A fifth embodiment of the present invention is a foam sheet formed according to any one of the processes according to the first to fourth embodiments having a thickness of 1 $\mu$m to 10 mm, and a mean cell diameter of 0.005 to 10 $\mu$m.

BRIEF DESCRIPTION OF THE DRAWINGS

Fig. 1 is a drawing of a first example of a continuous production process using a coating method.
Fig. 2 is a drawing of a second example of a continuous production process using a coating method.
Fig. 3 is a drawing of a third example of a continuous production process using a coating method.
Fig. 4 is a drawing of an example of a continuous production process using an extrusion molding method.
Fig. 5 is a graph showing the light reflection spectrum of a foam film of Example 1.
Fig. 6 is a graph showing the light transmission spectrum of a foam film of Example 1.

BEST MODE FOR CARRYING OUT THE INVENTION

A foamable composition used in the present invention is a composition that contains at least the following two constituents. The first constituent is an acid generator that generates acid or a base generator that generates base by the action of an active energy beam, while the other constituent is a decomposing foamable compound that decomposes and eliminates one or more types of low boiling point volatile substances by reacting with the generated acid or base.

Acid Generator/Base Generator:

A photoacid generator or photobase generator for chemically amplified photoresists and photocationic polymerization may be used as the acid generator or base generator in the foamable composition of the present invention.
Examples of the preferable photoacid generators of the present invention include $PF_6$-, $AsF_6$-, $SbF_6$- and $CF_3SO_3$- salts of aromatic or aliphatic onium compounds selected from:

(1) diazonium salt compounds;
(2) ammonium salt compounds;
(3) iodonium salt compounds;
(4) sulfonium salt compounds;
(5) oxonium salt compounds; and,
(6) phosphonium salt compounds.

Specific examples thereof include, but are not limited to, the following: bis(phenylsulfonyl) diazomethane, bis(cyclohexylsulfonyl) diazomethane, bis(tert-butylsulfonyl) diazomethane, bis(p-methylphenylsulfonyl) diazomethane, bis(4-chlorophenylsulfonyl) diazomethane, bis(p-tolylsulfonyl) diazomethane, bis(4-tert-butylphenylsulfonyl) diazomethane, bis(2,4-xylylsulfonyl) diazomethane, bis(cyclohexylsulfonyl) diazomethane, benzoylphenylsulfonyl diazomethane, trifluoromethane sulfonate, trimethylsulfonium trifluoromethane sulfonate, triphenylsulfonium trifluoromethane sulfonate, triphenylsulfonium hexafluoroantimonate, 2,4,6-trimethylphenyl diphenylsulfonium trifluoromethane sulfonate, p-tolyldiphenylsulfonium trifluoromethane sulfonate, 4-phenylthiophenyl diphenylsulfonium hexafluorophosphate, 4-phenylthiophenyl diphenylsulfonium hexafluoroantimonate, 1-(2-naphthoylmethyl) thioranium hexafluoroantimonate, 1-(2-naphthoylmethyl) thioranium trifluoromethane sulfonate, 4-hydroxy-1-naphthyl dimethylsulfonium hexafluoroantimonate, 4-hydroxy-1-naphthyl dimethylsulfonium trifluoromethane sulfonate, (2-oxo-1-cyclohexyl)(cyclohexyl)methylsulfonium trifluoromethane sulfonate, (2-oxo-1-cyclohexyl)(2-norbornyl)methylsulfonium trifluoromethane sulfonate, diphenyl-4-methylphenylsulfonium perfluoromethane sulfonate, diphenyl-4-tert-butylphenylsulfonium perfluorooctane sulfonate, diphenyl-4-methoxyphenylsulfonium perfluorooctane sulfonate, diphenyl-4-methylphenylsulfonium tosylate, diphenyl-4-methoxyphenylsulfonium tosylate, diphenyl-4-isopropylphenylsulfonium tosylate, diphenyl iodonium, diphenyl iodonium tosylate, diphenyl iodonium chloride, diphenyl iodonium hexafluoroarsenate, diphenyl iodonium hexafluorophosphate, diphenyl iodonium nitrate, diphenyl iodonium perchlorate, diphenyl iodonium trifluoromethane sulfonate, bis(methylphenyl) iodonium trifluoromethane sulfonate, bis(methylphenyl) iodonium tetrafluoroborate, bis(methylphenyl) iodonium hexafluorophosphate, bis(methylphenyl) iodonium hexafluoroantimonate, bis(4-tert-butylphenyl) iodonium trifluoromethane sulfonate, bis(4-tert-butylphenyl) iodonium hexafluorophosphate, bis(4-tert-butylphenyl) iodonium hexafluoroantimonate, bis(4-tert-butylphenyl) iodonium perfluorobutane sulfonate, 2-methyl-4,6-bis(trichloromethyl)-1,3,5-triazine, 2,4,6-tri(trichloromethyl)-1,3,5-triazine, 2-phenyl-4,6-ditrichloromethyl-1,3,5-triazine, 2-(p-methoxyphenyl)-4,6-ditrichloromethyl-1,3,5-triazine, 2-napthyl-4,6-ditrichloromethyl-1,3,5-triazine, 2-biphenyl-4,6-ditrichloromethyl-1,3,5-triazine, 2-(4'-hydroxy-4-biphenyl)-4,6-ditrichloromethyl-1,3,5-triazine, 2-(4'-methyl-4-biphenyl)-4,6-ditrichloromethyl-1,3,5-triazine, 2-(p-methoxyphenylvinyl)-4,6-bis(trichloromethyl)-1,3,5-triazine, 2-(4-chlorophenyl)-4,6-bis(trichloromethyl)-1,3,5-triazine, 2-(4-methoxyphenyl)-4,6-bis(trichloromethyl)-1,3,5-triazine, 2-(4-methoxy-1-naphthyl)-4,6-bis(trichloromethyl)-1,3,5-triazine, 2-(benzo[d][1,3]dioxolan-5-yl)-4,6-bis(trichloromethyl)-1,3 ,5-triazine, 2-(4-methoxystyryl)-4,6-bis(trichloromethyl)-1,3,5-triazine, 2-(3,4,5-trimethoxystyryl)-4,6-bis(trichloromethyl)-1,3,5-triazine, 2-(3,4-dimethoxystyryl)-4,6-bis(trichloromethyl)-1,3,5-triazine, 2-(2,4-dimethoxystyryl)-4,6-bis(trichloromethyl)-1,3,5-triazine, 2-(2-methoxystyryl)-4,6-bis(trichloromethyl)-1,3,5-triazine, 2-(4-butoxyphenyl)-4,6-bis(trichloromethyl)-1,3,5-triazine, 2-(4-pentyloxystyryl)-4,6-bis(trichloromethyl)-1,3,5-triazine, 2, 6-di-tert-butyl-4-methylpyrylium trifluoromethane sulfonate, trimethyl oxonium tetrafluoroborate, triethyl oxonium tetrafluoroborate, N-hydroxyphthalimide trifluoromethane sulfonate, N-hydroxynaphthalimide trifluoromethane sulfonate, (α-benzoylbenzyl)p-toluene sulfonate, (β-benzoyl-β-hydroxyphenethyl) p-toluene sulfonate, 1,2,3-benzenetriyl tris-methane sulfonate, (2,6-dinitrobenzyl)p-toluene sulfonate, (2-nitrobenzyl)p-toluene sulfonate, and (4-nitrobenzyl) p-toluene sulfonate. Among these, iodonium salt compounds and sulfonium salt compounds are preferable.

In addition, sulfone compounds that optically generate sulfonic acid by being irradiated with an active energy beam such as 2-phenylsulfonyl acetophenone, halogenides that optically generate hydrogen halides by being irradiated with an active energy beam such as phenyl tribromomethyl sulfone and 1,1-bis(4-chlorophenyl)-2,2,2-trichloroethane, as well as ferrocenium compounds that optically generate phosphoric acid by being irradiated with an active energy beam such as bis(cyclopentadienyl)ferrocenium hexafluorophosphate and bis(benzyl)ferrocenium hexafluorophosphate, can also be used in addition to the aforementioned onium compounds.

Moreover, the following imide compound derivatives having the ability to generate acid can also be used: N-(phenylsulfonyloxy)succinimide, N-(trifluoromethylsulfonyloxy)succinimide, N-(10-camphorsulfonyloxy)succinimide, N-(trifluoromethylsulfonyloxy)phthalimide, N-(trifluoromethylsulfonyloxy)-5-norbornene-2,3-dicarboxyimide, N-(trifluoromethylsulfonyloxy)naphthalimide, and N-(10-camphorsulfonyloxy)naphthalimide.

Preferable examples of the photobase generators include:

    (1) oxime ester compounds,
    (2) ammonium compounds,
    (3) benzoin compounds,
    (4) dimethoxybenzyl urethane compounds, and
    (5) orthonitrobenzyl urethane compounds.

These compounds generate amines as bases by being irradiated with an active energy beam. Base generators that generate ammonia or hydroxy ions due to the action of light may also be used. These can be selected from, for example, N-(2-nitrobenzyloxycarbonyl)piperidine, 1,3-bis[N-(2-nitrobenzyloxycarbonyl)-4-piperidyl]propane, N,N'-bis(2-nitrobenzyloxycarbonyl)dihexylamine, and O-benzylcarbonyl-N-(1-phenylethylidene)hydroxylamine. Moreover, compounds that generate a base by heating may also be used in combination with the aforementioned photobase generators.

In addition, a suitable photosensitizer may be optionally used in combination to expand the photosensitie wavelength band of the active energy beam of the photoacid generator or photobase generator. Examples of the photosensitizers for onium salt compounds include acridine yellow, benzoflavin and acridine orange.

An acid amplifier or base amplifier (see, for example, K. Ichimura et al., Chemistry Letters, 551-552 (1995), Japanese Unexamined Patent Application, First Publication No. H8-248561, Japanese Unexamined Patent Application, First Publication No. 2000-330270) can be used together with the acid generator or base generator as a method for minimizing the amount of acid generator or base generator added as well as optical illumination energy while still forming the required acid. Although acid amplifiers are thermochemically stable at normal temperatures, they are decomposed by acid and generate strong acids that significantly accelerate acidic catalytic reactions. The reactions which cause to improve the generation efficiency of the acid or base make it possible to control the foam formation rate and foam structure.

Decomposing Foamable Compound:

A decomposing foamable compound (to be abbreviated as "decomposing compound") used in the foamable composition of the present invention decomposes and eliminates one or more types of low boiling point volatile substances (low boiling point volatile compounds) by reacting with acid or base. Namely, a decomposing functional group capable of generating a low boiling point volatile substance must be introduced into this decomposing compound in advance. A low billing point refers to the upper limit of the temperature at which vaporization occurs during foaming. Although normally the boiling point of the low boiling point substance is preferably 100°C or lower, it is preferably 80°C or lower, and even more preferably room temperature or lower. Examples of the low boiling point substance include isobutene (boiling point: -7°C), carbon dioxide (boiling point: -79°C) and nitrogen (boiling point: -196°C). Examples of the decomposing functional group that react with acid include tert-butyl groups, tert-butyloxycarbonyl groups, keto acids and keto acid ester groups, while examples of those that react with base include urethane groups and carbonate groups. For example, among those groups that react with acid, tert-butyl groups generate isobutene gas, tert-butyloxycarbonyl groups generate isobutene gas and carbon dioxide, keto acid sites generate carbon dioxide, and keto acid esters such as keto acid tert-butyl groups generate carbon dioxide and isobutene. Among those groups that react with base, urethane groups and carbonate groups generate carbon dioxide gas. In this manner, each of these gases are eliminated from the decomposing compound. Monomers, oligomers or polymers can be used as examples of the acid (or base) decomposing compounds, and can be classified into, for example, the groups of compounds indicated below.

(1) Non-curing, low molecular weight decomposing compounds
(2) Curable, monomeric decomposing compounds
(3) Polymeric decomposing compounds

As a typical example of the curable, monomeric decomposing compounds, in the case of an active energy beam-curable compound that contains a vinyl group so as to allow the occurrence of a polymerization reaction when irradiated with an active energy beam, uniform microcells are formed easily, and a foam of superior strength can be obtained. Specific examples of the decomposing compounds are indicated below.

(1) -a. Non-curing, Low Molecular Weight Decomposing Compounds

<Acid Decomposing Compounds>

1-tert-butoxy-2-ethoxyethane, 2-(tert-butoxycarbonyloxy)naphthalene, N-(tert-butoxycarbonyloxy)phthalimide, and 2-2-bis[p-(tert-butoxycarbonyloxy)phenyl]propane.

(1)-b. Non-curing, Low Molecular Weight Decomposing Compounds

<Basic Decomposing Compounds>

N-(9-fluorenylmethoxycarbonyl)piperidine, and the like.

(2)-a. Curable Monomeric Decomposing Compounds

<Acid Decomposing Compounds>

Tert-butyl acrylate, tert-butyl methacrylate, tert-butoxycarbonyl methyl acrylate, 2-(tert-butoxycarbonyl) ethyl acrylate, p-(tert-butoxycarbonyl) phenyl acrylate, p-(tert-butoxycarbonylethyl) phenyl acrylate, 1-(tert-butoxycarbonylmethyl) cyclohexyl acrylate, 4-tert-butoxycarbonyl-8-vinylcarbonyloxy-tricyclo[5.2.1.02, 6]decane, 2-(tert-butoxycarbonyloxy) ethyl acrylate, p-(tert-butoxycarbonyloxy) phenyl acrylate, p-(tert-butoxycarbonyloxy) benzyl acrylate, 2-(tert-butoxycarbonylamino) ethyl acrylate, 6-(tert-butoxycarbonylamino) hexyl acrylate, p-(tert-butoxycarbonylamino) phenyl acrylate, p-(tert-butoxycarbonylamino) benzyl acrylate, p-(tert-butoxycarbonylaminomethyl) benzyl acrylate, (2-tert-butoxyethyl) acrylate, (3-tert-butoxypropyl) acrylate, (1-tert-butyldioxy-1-methyl) ethyl acrylate, 3,3-bis(tert-butyloxycarbonyl) propyl acrylate, 4,4-bis(tert-butyloxycarbonyl) butyl acrylate, p-(tert-butoxy) styrene, m-(tert-butoxy) styrene, p-(tert-butoxycarbonyloxy) styrene, m-(tert-butoxycarbonyloxy) styrene, acryloyl acetate, methacroyl acetate, tert-butylacryloyl acetate, tert-butylmethacroyl acetate and N-(tert-butoxycarbonyloxy) maleimide.

(2)-b. Curable, Monomeric Decomposing Compounds

<Basic Decomposing Compounds>

4-[(1,1-dimethyl-2-cyano) ethoxycarbonyloxy] styrene, 4-[(1,1-dimethyl-2-phenylsulfonyl) ethoxycarbonyloxy] styrene, 4-[(1,1-dimethyl-2-methoxycarbonyl) ethoxycarbonyloxy] styrene, 4-(2-cyanoethoxycarbonyloxy) styrene, (1,1-dimethyl-2-phenylsulfonyl) ethyl methacrylate, (1,1-dimethyl-2-cyano) ethyl methacrylate, and the like.

(3)-a, Polymeric Decomposing Compounds

<Acid Decomposing Compounds>

Poly(tert-butylacrylate), poly(tert-butylmethacrylate), poly(tert-butoxycarbonylmethylacrylate), poly[2-(tert-butoxycarbonyl) ethyl acrylate], poly[p-(tert-butoxycarbonyl) phenyl acrylate], poly[p-(tert-butoxycarbonylethyl) phenyl acrylate], poly[1-(tert-butoxycarbonylmethyl) cyclohexyl acrylate], poly{4-tert-butoxycarbonyl-8-vinylcarbonyloxy-tricyclo [5.2.1.02,6] decane}, poly[2-(tert-butoxycarbonyloxy) ethyl acrylate], poly[p-(tert-butoxycarbonyloxy) phenyl acrylate], poly[p-(tert-butoxycarbonyloxy) benzyl acrylate], poly[2-(tert-butoxycarbonylamino) ethyl acrylate], poly[6-(tert-butoxycarbonylamino) hexyl acrylate], poly[p-(tert-butoxycarbonylamino) phenyl acrylate], poly[p-(tert-butoxycarbonylamino) benzyl acrylate], poly[p-(tert-butoxycarbonylaminomethyl) benzyl acrylate], poly(2-tert-butoxyethylacrylate), poly(3-tert-butoxypropylacrylate), poly[(1-tert-butyldioxy-1-methyl)ethyl acrylate], poly[3,3-bis(tert-butyloxycarbonyl) propyl acrylate], poly[4,4-bis(tert-butyloxycarbonyl) butyl acrylate], poly[p-(tert-butoxy) styrene], poly[m-(tert-butoxy) styrene], poly[p-(tert-butoxycarbonyloxy) styrene], poly[m-(tert-butoxycarbonyloxy) styrene], polyacryloyl acetate, polymethacroyl acetate, poly[tert-butylacroyl acetate], poly[tert-butylmethacroyl acetate], N-(tert-butoxycarbonyloxy)maleimide / styrene copolymers, and the like.

(3)-b. Polymeric Decomposing Compounds

<Basic Decomposing Compounds>

Poly{p-[(1,1-dimethyl-2-cyano) ethoxycarbonyloxy] styrene}, poly{p-[(1,1-dimethyl-2-phenylsulfonyl) ethoxycarbonyloxy] styrene}, poly{p-[(1,1-dimethyl-2-methoxycarbonyl) ethoxycarbonyloxy] styrene}, poly[p-(2- cyanoethoxycarbonyloxy) styrene], poly[(1,1-dimethyl-2-phenylsulfonyl) ethyl methacrylate], poly[(1,1-dimethyl-2-cyano) ethyl methacrylate], and the like.

Organic polymer compounds such as polyethers, polyamides, polyesters, polyimides, polyvinyl alcohols and dendrimers into which a decomposing functional group has been introduced can be used as the acid decomposing or basic decomposing compounds. Moreover, an inorganic compound such as silica into which a decomposing functional group has been introduced are also included in the acid decomposing or basic decomposing compounds. The decomposing functional group is preferably introduced into a compound having a functional group selected from the group consisting of a carboxy group or hydroxy group and amino group.

The aforementioned decomposing compounds may be used alone or two or more types that are different from each other may be mixed and used in combination. In addition, the aforementioned decomposing compounds can also be used by mixing with other resins. The decomposing compounds and the other resins may be compatible or incompatible when they are mixed. The other resins can be suitably selected from commonly used resins such as ABS resins, polyester resins such as polyethylene terephthalate and polybutylene terephthalate, unsaturated polyester resins, polycarbonate resins, polyolefin resins such as polyethylene and polypropylene, polyolefin compound resins, polystyrene resins, polybutadiene resins, acrylic resins, methacrylic resins, fluororesins, polyimide resins, polyacetal resins, polysulfone resins, vinyl chloride resins, methyl cellulose, ethyl cellulose, hydroxypropyl cellulose, starch, polyvinyl alcohol, polyamide resins, phenol resins, melamine resins, urea resins, urethane resins, epoxy resins and silicone resins. In addition, gas barrier resins can also be used for the purpose of internalizing in the sheet a low boiling point volatile substance that vaporizes (by decomposing) from a decomposing compound. The gas barrier resin may be mixed or layered, and is preferably layered on the sheet surface to internalize a low boiling point volatile substance in the sheet.

Among the decomposing foamable compounds, the curable, monomeric decomposing compounds and polymeric decomposing compounds may be used alone or they may be used by mixing with the aforementioned commonly used resins. In contrast, since the non-curing, low molecular weight decomposing compounds do not form a sheet by themselves, they are required to be used by mixing with either the aforementioned commonly used resins or "other active energy beam-cured unsaturated organic compounds" to be described later.

A compound including the decomposing foamable functional group and containing at least one type of hydrophobic functional group can be used as a foamable composition in order to improve the moisture resistance of the foam sheet of the present invention. Hydrophobic functional groups available for the present invention are preferably selected from the group mainly consisting of aliphatic groups, alicyclic groups, aromatic groups, halogen groups and nitrile groups. The decomposing foamable functional groups are easily introduced into hydrophilic functional groups selected from the group mainly consisting of carboxy groups, hydroxy groups and amino groups. Thus, the decomposing compounds of the present invention are preferably complex compounds composed of a decomposing unit in which the decomposing foamable function group is introduced into the aforementioned hydrophilic functional group, and a hydrophobic unit containing a hydrophobic functional group. More preferable complex compounds are those in which the decomposing unit and hydrophobic unit are vinyl polymers. Examples of the hydrophobic units include aliphatic (meth)acrylates such as methyl (meth)acrylate and ethyl (meth) acrylate, aromatic vinyl compounds such as styrene, methyl styrene and vinyl naphthalene, (meth)acrylonitrile compounds, vinyl acetate compounds, and vinyl chloride compounds. A typical example of the decomposing compounds is a vinyl copolymer including the combination of a decomposing unit in the form of tert-butyl acrylate, in which a decomposing functional group in the form of a tert-butyl group is introduced into acrylic acid having a hydrophilic functional group in the form of a carboxy group, and a hydrophobic unit in the form of methyl acrylate having a methyl group for the hydrophobic functional group. Specific examples of the decomposing compounds composed of combinations of the decomposing units and the hydrophobic units are indicated below.

tert-butyl acrylate/methyl methacrylate copolymer
tert-butyl methacrylate/methyl acrylate copolymer

tert-butyl methacrylate/methyl methacrylate copolymer

tert-butyl acrylate/ethyl acrylate copolymer

tert-butyl acrylate/ethyl methacrylate copolymer

tert-butyl methacrylate/ethyl acrylate copolymer

tert-butyl methacrylate/ethyl methacrylate copolymer

tert-butyl acrylate/styrene copolymer

tert-butyl acrylate/vinyl chloride copolymer

tert-butyl acrylate/acrylonitrile copolymer

p-(tert-butoxycarbonyloxy) styrene/styrene copolymer

In addition, the decomposing unit and hydrophobic unit of the decomposing compound can be used alone or in combination with two or more types thereof. Any type of copolymerization can be adopted, examples of which include random copolymerization, block copolymerization and graft copolymerization. In addition, the copolymerization ratio of the hydrophobic unit is preferably 5 to 95% by mass relative to the total amount of decomposing compound, and in consideration of the decomposing foamability of the decomposing compound and the environmental stability of the foam structure, the copolymerization ratio is more preferably 20 to 80% by mass.

The aforementioned decomposing compound may be used alone or in combination with two or more different types thereof. The decomposing compound generates a cell-forming gas as a result of decomposition and elimination of a decomposing foamable functional group, followed by the formation of a compound that contains at least one type of hydrophobic functional group.

In order to improve the moisture resistance of a foam sheet of the present invention, a compound in which a decomposing foamable functional group has been introduced to a low hygroscopic compound having an equilibrium water absorption rate of less than 10% as measured according to the method of JIS K7209D in an environmental atmosphere at a temperature of 30°C and relative humidity of 60% can be used for the foamable composition. Examples of the low hygroscopic compounds having a structure that facilitates the introduction of a decomposing foamable functional group include p-hydroxystyrene and m-hydroxystyrene. Thus, examples of the decomposing compounds include p-(tert-butoxy) styrene, m-(tert-butoxy) styrene, p-(tert-butoxycarbonyloxy) styrene and m-(tert-butoxycarbonyloxy) styrene. These may be curable monomers or a mixture of one or more types of polymers.

In addition, a decomposing foamable function group may also be introduced into a complex compound containing a combination of a high hygroscopic compound having a water absorption rate of 10% or more and the low hygroscopic compound having a water absorption rate of less than 10%. However, the resulting complex compound preferably has a water absorption rate of less than 10% by suitably combining the aforementioned compounds. For example, a copolymer (complex compound) of the high hygroscopic compound in the form of acrylic acid and the low hygroscopic compound in the form of p-hydroxystyrene preferably has a copolymerization ratio of acrylic acid to p-hydroxystyrene of 90/10 to 0/100. Specific examples of the decomposing compounds include tert-butylacrylate/p-(tert-butoxy) styrene copolymer, tert-butylacrylate/m-(tert- butoxy) styrene copolymer, tert-butylacrylate/p-(tert- butoxycarbonyloxy) styrene copolymer, tert-butylacrylate/m-(tert-butoxycarbonyloxy) styrene copolymer, and tert-butylmethacrylate/p-(tert-butoxycarbonyloxy) styrene copolymer.

Moreover, a decomposing foamable functional group may also be introduced into the low hygroscopic polymer material selected from the group consisting of polyesters, polyimides, polyvinyl acetate, polyvinyl chloride, polyacrylonitrile, phenol resins and dendrimers.

The aforementioned decomposing compounds may be used alone or in combination with two or more different types thereof. The decomposing compound generates a cell-forming gas as a result of decomposition and elimination of a decomposing foamable functional group followed by the formation of the low hygroscopic compound.

Foamable Composition:

In addition to an acid generator or base generator and a decomposing foamable compound, other active energy beam-cured unsaturated organic compounds may be combined in a foamable composition used in the present invention. Specific examples of such compounds used in combination are indicated below.

    (1) (Meth)acrylates of aliphatic, alicyclic and aromatic monovalent to hexavalent alcohols and polyalkylene glycols

    (2) (Meth)acrylates of compounds obtained by addition of alkylene oxide to aliphatic, alicyclic and aromatic monovalent to hexavalent alcohols

    (3) Esters of poly(meth)acryloyl alkyl phosphoric acids

    (4) Reaction products of polybasic acids, polyoles and (meth)acrylic acid

    (5) Reaction products of isocyanates, polyoles and (meth)acrylic acid

    (6) Reaction products of epoxy compounds and (meth) acrylic acid

    (7) Reaction products of epoxy compounds, polyoles and (meth)acrylic acid

(8) Reaction products of melamine and (meth)acrylic acid

Among those compounds that can be used in combination, curable monomers and resins can be expected to demonstrate the effects of improving physical properties such as strength and heat resistance of the foam as well as controlling foamability. In addition, the use of curable monomers for the decomposing compound and compound used in combination enables solvent-free coating, thereby making it possible to provide a production process that places minimal burden on the environment.

Specific examples of the compounds used in combination include, but are not limited to, methyl acrylate, ethyl acrylate, lauryl acrylate, stearyl acrylate, 2-ethylhexyl acrylate, 2-hydroxyethyl acrylate, 2-hydroxyethyl methacrylate, 2-hydroxypropyl acrylate, 2-hydroxypropyl methacrylate, 2-hydroxybutyl acrylate, 2-hydroxybutyl methacrylate, tetrahydrofurfuryl acrylate, tetrahydrofurfuryl methacrylate, caprolactone-modified tetrahydrofurfuryl acrylate, cyclohexyl acrylate, cyclohexyl methacrylate, dicyclohexyl acrylate, isoboronyl acrylate, isoboronyl methacrylate, benzyl acrylate, benzyl methacrylate, ethoxy diethylene glycol acrylate, methoxy triethylene glycol acrylate, methoxy propylene glycol acrylate, phenoxy polyethylene glycol acrylate, phenoxy polypropylene glycol acrylate, ethylene oxide-modified phenoxy acrylate, N,N-dimethylaminoethyl acrylate, N,N-dimethylaminoethyl methacrylate, 2-ethylhexyl carbitol acrylate, ω-carboxy polycaprolactone monoacrylate, phthalic acid monohydroxyethyl acrylate, acrylic acid dimer, 2-hydroxy-3-phenoxypropyl acrylate, acrylic acid-9,10-epoxidated oleyl, maleic acid ethylene glycol monoacrylate, dicyclopentenyloxy ethylene acrylate, acrylate of caprolactone addition product of 4,4-dimethyl-1,3-dioxoran, polybutadiene acrylate, ethylene oxide-modified phenoxidated phosphoric acid acrylate, ethanediol diacrylate, ethanediol dimethacrylate, 1,3-propanediol diacrylate, 1,3-propanediol dimethacrylate, 1,4-butanediol diacrylate, 1,4-butanediol dimethacrylate, 1, 6-hexanediol diacrylate, 1, 6-hexanediol dimethacrylate, 1,9-nonanediol diacrylate, 1,9-nonanediol dimethacrylate, diethylene glycol diacrylate, polyethylene glycol diacrylate, polyethylene glycol dimethacrylate, polypropylene glycol diacrylate, polypropylene glycol dimethacrylate, neopentyl glycol diacrylate, 2-butyl-2-ethyl propanediol diacrylate, ethylene oxide-modified bisphenol A diacrylate, polyethylene oxide-modified bisphenol A diacrylate, polyethylene oxide-modified hydrogenated bisphenol A diacrylate, propylene oxide-modified bisphenol A diacrylate, polypropylene oxide-modified bisphenol A diacrylate, ethylene oxide-modified isocyanuric acid diacrylate, pentaerythritol diacrylate monostearate, 1,6-hexandiol diglycidyl ether acrylic acid addition product, polyoxyethylene epichlorhydrin-modified bisphenol A diacrylate, trimethylol propane triacrylate, ethylene oxide-modified trimethylol propane triacrylate, polyethylene oxide-modified trimethylol propane triacrylate, propylene oxide-modified trimethylol propane triacrylate, polypropylene oxide-modified trimethylol propane triacrylate, pentaerythritol triacrylate, ethylene oxide-modified isocyanuric acid triacrylate, ethylene oxide-modified glycerol triacrylate, polyethylene oxide-modified glycerol triacrylate, propylene oxide-modified glycerol triacrylate, polypropylene oxide-modified glycerol triacrylate, pentaerythritol tetraacrylate, ditrimethylol propane tetraacrylate, dipentaerythritol tetraacrylate, dipentaerythritol pentaacrylate, dipentaerythritol hexaacrylate, caprolactone-modified dipentaerythritol hexaacrylate, and polycaprolactone-modified dipentaerythritol hexaacrylate.

Moreover, an active energy beam-cured resin having a (meth)acryloyl group on its molecular chain terminal and a molecular weight of about 400 to 5000 can also be combined for all or a portion of the aforementioned active energy beam-cured unsaturated organic compound. As such curable resins, polyurethane poly(meth)acrylates polymers such as polyurethane-modified polyether poly(meth)acrylate and polyurethane-modified polyester poly(meth)acrylate are preferably used, for example.

Inorganic or organic fillers, various types of dispersants such as surfactants, polyvalent isocyanate compounds, epoxy compounds, reactive compounds such as organometallic compounds and antioxidants, silicone oils and machining assistants, ultraviolet absorbents, fluorescent whiteners, anti-slip agents, antistatic agents, anti-blocking agents, anti-fogging agents, photostabilizers, lubricants, softeners, colored dyes and other stabilizers may be contained as necessary as additives in a foamable composition used in the present invention. The use of these additives can be expected to improve foamability, optical properties (particularly in the case of white pigment) as well as electrical and magnetic characteristics (particularly in the case of carbon or other conductive particles).

Specific examples of the inorganic compound fillers include pigments such as titanium oxide, magnesium oxide, aluminum oxide, silicon oxide, calcium carbonate, barium sulfate, magnesium carbonate, calcium silicate, aluminum hydroxide, clay, talc and silica, metallic soaps such as zinc stearate, various types of dispersants such as surfactants, calcium sulfate, magnesium sulfate, kaolin, zeolite, diatomaceous earth, zinc oxide, silicon oxide, magnesium hydroxide, calcium oxide, magnesium oxide, alumina, mica, asbestos powder, glass powder, shirasu balloon and zeolite.

Examples of the organic compound fillers include cellulose powders such as wood dust and pulp dust, and polymer beads. Examples of the polymer beads that are used include those produced from acrylic resin, styrene resin or cellulose derivatives, polyvinyl resin, polyvinyl chloride, polyester, polyurethane, polycarbonate and crosslinking monomers.

Two or more types of these fillers may be used as a mixture.

Specific examples of the ultraviolet absorbents are selected from salicylic acid-based, benzophenone-based and benzotriazole-based ultraviolet absorbents. Examples of the salicylic acid-based ultraviolet absorbents include phenyl salicylate, p-t-butylphenyl salicylate and p-octylphenyl salicylate. Examples of the benzophenone-based ultraviolet absorbents include 2,4-dihydroxybenzophenone, 2-hydroxy-4-methoxybenzophenone, 2-hydroxy-4-octoxybenzophenone and 2,2'-dihydroxy-4-methoxybenzophenone. Examples of the benzotriazole- based ultraviolet absorbents include 2-(2'-hydroxy-5'- methylphenyl) benzotriazole and 2-(2'-5'-t-butylphenyl) benzotriazole.

Specific examples of the antioxidants include monophenol-based, bisphenol-based and polymer-type phenol-based antioxidants, sulfur-based antioxidants and phosphorous-based antioxidants.

Typical examples of the photostabilizers include hindered amine compounds.

The softeners are used for the purpose of improving workability and formability, and specific examples thereof include ester compounds, amide compounds, hydrocarbon polymers having a side chain, mineral oils, liquid paraffins and waxes.

There are no particular limitations on the ester compounds provided that they are monoesters or polyesters having a structure composed of an alcohol and carboxylic acid, and may be compounds in which the hydroxyl group and carbonyl group terminals remain within the molecule, or compounds in which they are closed in the form of an ester group. Specific examples thereof include stearyl stearate, sorbitan tristearate, epoxy soybean oil, refined castor oil, hardened castor oil, dehydrated castor oil, epoxy soybean oil, ultra-hardened oils, trioctyl trimellitate, ethylene glycol dioctanoate and pentaerythritol tetraoctanoate.

There are no particular limitations on the amide compounds provided that they are monoamides or polyamides having a structure composed of an amine and a carboxylic acid, and may be compounds in which the amino group and carbonyl group terminals remain within the molecular structure thereof or compounds in which they are closed in the form of an amide group. Specific examples thereof include stearic acid amide, behenic acid amide, hexamethylene bis stearic acid amide, trimethylene bis octylic acid amide, hexamethylene bis hydroxystearic acid amide, trioctatrimellitic acid amide, distearyl urea, butylenes bis stearic acid amide, xylylene bis stearic acid amide, distearyl adipic acid amide, distearyl phthalic acid amide, distearyl octadecadinoic acid amide, episilon-caprolactam and derivatives thereof.

Preferable examples of the hydrocarbon polymers having a side chain include poly-$\alpha$-olefins that have a side chain of four or more carbon atoms and are normally classified as oligomers. Specific examples thereof include ethylene-propylene copolymers and their maleic acid derivatives, isobutylene polymers, butadiene, isoprene oligomers and their hydrogenation products, 1-hexene polymers, polystyrene polymers and derivatives derived therefrom, hydroxypolybutadiene and hydrogenation products thereof, and hydroxy-terminating hydrogenated polybutadiene.

Production of Foam Sheet:

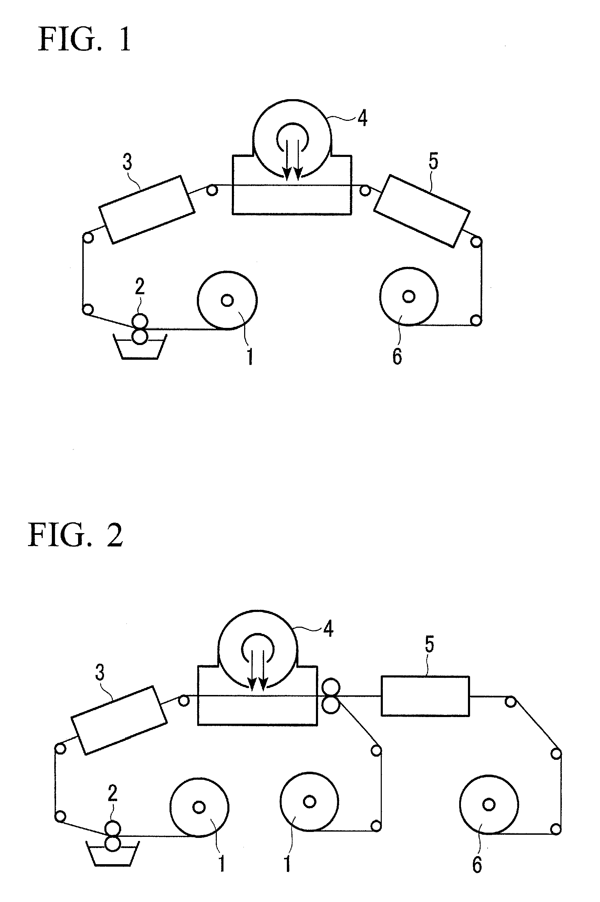

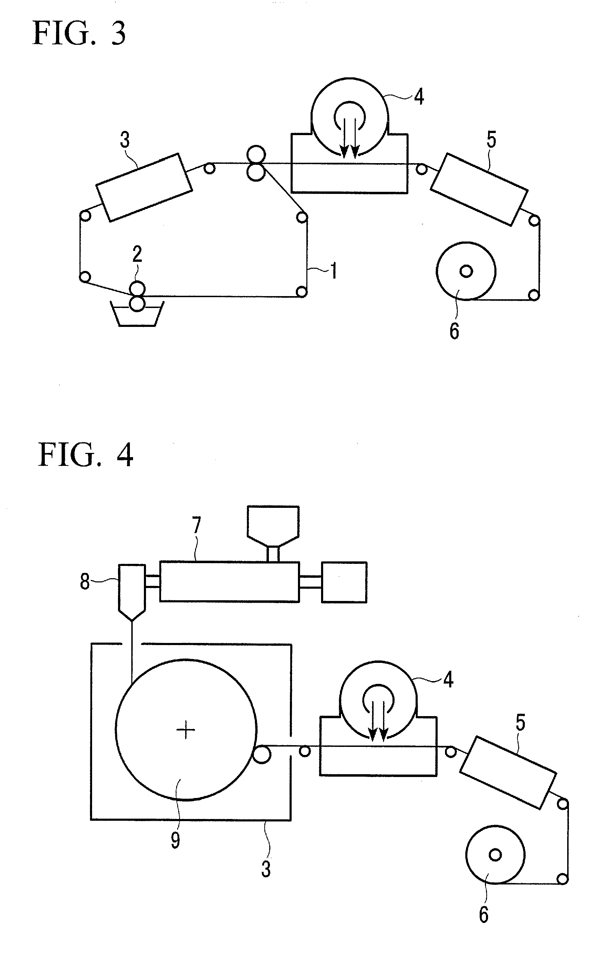

Although a production process of a foam sheet is described as an example of a production process of a foam sheet of the present invention in which the aforementioned foamable composition is formed into the shape of a sheet followed by irradiating with an active energy beam, heating and foaming, the present invention is not limited thereto. For example, irradiation and heating may be carried out simultaneously or the sheet may be irradiated after heating. Although the production process of the present invention may be a batch process or continuous process, its production steps includes a forming step, drying step, active energy beam irradiation step and heating and foaming step. The drying step may be omitted depending on the particular case. An example of a continuous process is shown in Figs. 1 to 4. Examples of the types of production processes include coating methods shown in Figs. 1 to 3 and an extrusion molding method shown in Fig. 4, and the type of production process can be classified according to the method used in the forming step.

The following provides an explanation of the production process shown in Fig. 1. A foamable composition is coated onto a support 1 using a coating head 2. In the case the foamable composition is a liquid diluted with a solvent and so forth, a foamable composition layer is obtained on the support by removing the solvent component with a drying apparatus 3. Continuing, the coated support is irradiated with an electron beam using an electron beam irradiation apparatus 4 followed by heating and foaming with a heating apparatus 5. The resulting foam 6 is in the form of a foam sheet in which a foam resin layer is formed on the support.

The following provides an explanation of the production process shown in Fig. 2. A foamable composition is coated onto a support 1 using a coating head 2. In the case the foamable composition is a liquid diluted with a solvent and so forth, a foamable composition layer is obtained on the support by removing the solvent component with a drying apparatus 3. Continuing, the coated support is irradiated with an electron beam using an electron beam irradiation apparatus 4 followed by separating the foamable composition layer from the support 1 and heating and foaming with a heating apparatus 5. The resulting foam 6 is in the form of a foam sheet composed only of a foam resin.

The following provides an explanation of the production process shown in Fig. 3. A foamable composition is coated onto a support 1 in the form of an endless belt using a coating head 2. In the case the foamable composition is a liquid diluted with a solvent and so forth, a foamable composition layer is obtained on the support by removing the solvent component with a drying apparatus 3. After separating the foamable composition layer from the support 1, it is irradiated with an electron beam with an electron beam irradiation apparatus 4 followed by heating and foaming with a heating apparatus 5. The resulting foam 6 is in the form of a foam sheet composed only of a foam resin.

Examples of coating methods used in Figs. 1 to 3 include bar coating, air doctor coating, blade coating, squeeze coating, air knife coating, roll coating, gravure coating, transfer coating, comma coating, smoothing coating, microgravure coating, reverse roll coating, multi-roll coating, dip coating, rod coating, kiss coating, gate roll coating, falling curtain coating, slide coating, fountain coating and slit die coating. Examples of the supports include paper, synthetic paper, plastic resin sheets, metal sheets and metal-deposited sheets, and these may be used alone or they may be laminated together. Examples of the plastic resin sheets include general-purpose plastic resin sheets such as polystyrene resin sheets, polyethylene, polypropylene and other polyolefin resin sheets, and polyethylene terephthalate and other polyester resin sheets, as well as engineering plastic sheets such as polyimide resin sheets, ABS resin sheets and polycarbonate resin sheets. Examples of metals that compose the metal sheets include aluminum and copper. Examples of the metal-deposited sheets include aluminum-deposited sheets and gold-deposited sheets.

Although there are no particular limitations on the support in the case of Figs. 2 and 3 in particular in which a single foam is produced by separating from the support, the support is preferably smooth and soft. In addition, separation of the cured resin coated layer may also be facilitated by preliminarily subjecting the surface of the sheet material to a suitable surface treatment such as silicone treatment to facilitate separation of the foamable composition layer.

The foamable composition may also be prepared as a diluted solution using a solvent in order to coat the foamable composition onto the support. Examples of the solvents that can be used include water, alcohol, ethyl acetate, toluene and methyl ethyl ketone. A drying step may be provided in the case of coating a foamable composition prepared as a solution. In the case of using a monomer that demonstrates curing by an active energy beam for the solvent, the drying step can be omitted. There are no particular limitations on drying apparatuses used, examples of which include electric or gas-type infrared dryers using radiant heat, roll heaters using electromagnetic induction, oil heaters using an oil medium, and drying apparatuses using their hot air.

Continuing, the foamable composition coated film is irradiated with an active energy beam. Examples of the active energy beams used in the present invention include electron beams, ultraviolet rays, gamma rays and other forms of ionizing radiation. Among these, electron beams or ultraviolet rays are particularly preferably used. Figs. 1 to 4 indicate examples of cases of irradiating with electron beams.

In the case of using electron beam irradiation, an electron beam accelerator is preferably used having an acceleration voltage of 30 to 1000 kV and more preferably 30 to 300 kV, and the absorbed dose of a single pass is preferably controlled to 0.5 to 20 Mrad (1 rad = 0.01 Gy) in order to obtain adequate penetration. If the acceleration voltage or electron beam dose is lower than the above ranges, the penetration of the electron beam may become inadequate and the electron beam may be unable to adequately penetrate to the inside of the coated liquid layer. If the acceleration voltage or electron beam dose exceed the above ranges, energy efficiency may decrease, the strength of the resulting cured coated layer may become inadequate, decomposition of the resin and additives contained therein may occur, and the quality of the resulting foam may become unsatisfactory. Although an electrocurtain system, scanning type or double scanning type may be used for the electron beam accelerator, a curtain beam type electron beam accelerator is used preferably since it is comparatively inexpensive and allows the generation of a large output. If the oxygen concentration of the irradiating atmosphere is high during electron beam irradiation, the generation of acid or base and/or curing of the curable decomposing compounds may be inhibited. Consequently, it is preferable to replace the air in the irradiating atmosphere with an inert gas such as nitrogen, helium or carbon dioxide. The oxygen concentration of the irradiating atmosphere is preferably suppressed to 1000 ppm or less, and more preferably 500 ppm or less to obtain stable electron beam energy.

In the case of ultraviolet ray irradiation, an ultraviolet lamp that is ordinarily used in the fields of semiconductors and photoresists or ultraviolet ray curing can be used. Ordinary examples of the ultraviolet lamps include halogen lamps, halogen heater lamps, xenon short arc lamps, xenon flash lamps, ultra-high-pressure mercury lamps, high-pressure mercury lamps, low-pressure mercury lamps, medium-pressure mercury lamps, deep UV lamps, metal halide lamps, noble gas fluorescent lamps, krypton arc lamps and excimer lamps. More recently, Y-ray lamps that emit ultra-short wavelength rays (having a peak at 214 nm) have been also used. Among these lamps, there are also ozone-free lamps that generate low levels of ozone. These ultraviolet rays may be in the form of scattered light or parallel light having a high degree of linearity.

In addition, various types of lasers such as ArF excimer lasers, KrF excimer lasers and YAG lasers provided with an intermediate high-frequency unit containing a non-linear optical crystal, as well as ultraviolet light-emitting diodes, can also be used for radiating ultraviolet rays. Although there are no particular limitations on the emission wavelength of the ultraviolet lamps, lasers or ultraviolet light-emitting diodes provided it does not hinder foaming of the foamable composition, the emission wavelength preferably allows the efficient generation of acid or base by the photoacid generator or photobase generator. Namely, the emission wavelength preferably overlaps with the photosensitive wavelength range of the photoacid generator or photobase generator used. Moreover, the emission wavelength that overlaps with the maximum absorbing wavelength or the peak wavelength in the photosensitive wavelength ranges of these generators is more preferable since it facilitates improvement of generation efficiency. The irradiation intensity of the ultraviolet ray energy is suitably determined according to the foamable composition. Productivity can be increased in the case of using an ultraviolet lamp having a high irradiation intensity as is exemplified by various mercury lamps and metal halide lamps, and its irradiation intensity (lamp output) is preferably 30 W/cm or more in the case of a long arc lamp. The total irradiated luminous energy ($J/cm^2$) of the ultraviolet rays integrates irradiation time with the energy irradiation intensity, and is suitably determined according to the foam composition and the desired cell distribution. It may also be set in accordance with the extinction coefficients of the acid generator and base generator. In terms of stable and continuous production, a range of 1.0 $mJ/cm^2$ to 20 $J/cm^2$ is preferable. In the case of using an ultraviolet lamp, the irradiation time can be shortened due to the high irradiation intensity. In the case of using an excimer lamp or excimer laser, since the light approaches a single light beam although weak in irradiation intensity, it is possible to achieve higher generation efficiency and foamability provided the emission wavelength is optimized to the photosensitive wavelength of the generator. In the case of increasing the irradiated luminous energy, there are cases in which foamability may be inhibited due to the generation of heat depending on the ultraviolet lamp. Cooling with a cold mirror and so forth can be carried out at that time. Close proximity irradiation or projected irradiation can be employed for the irradiation method.

There are no particular limitations on heaters that can be used in the heating and foaming step, examples of which include those capable of heating by induction heating, resistance heating, dielectric heating (and microwave heating) and infrared heating. Electric or gas-type infrared dryers using radiant heat, roll heaters using electromagnetic induction, oil heaters using an oil medium, electrothermal heaters and hot air dryers using their hot air can also be used. In the case of dielectric heating or infrared heating, since these types of heating are internal heating methods that heat the inside of materials directly, they are preferable for instantaneously and uniformly heating as compared with external heating methods such as hot air dryers. In the case of dielectric heating, high-frequency energy having a frequency from 1 MHz to 300 MHz (wavelength: 30 m to 1 m) is used. A frequency of 6 MHz to 40 MHz is used commonly. In the induction heating, although microwave heating uses microwaves having a frequency from 300 MHz to 300 GHz (wavelength: 1 m to 1 mm) in particular, there are many cases in which frequencies of 2450 MHz and 915 MHz are used (the same frequencies as microwave ovens). In the case of infrared heating, electromagnetic waves having a wavelength in the infrared range of 0.76 to 1000 $\mu$m are used. Although the optimal wavelength band selected varies according to the conditions based on the heater surface temperature and infrared spectrum of heated materials and so forth, a wavelength band of 1.5 to 25 $\mu$m, and more preferably 2 to 15 $\mu$m can be used preferably. In addition, heating can also be carried out while applying pressure as in a hot press used during press forming. The temperature used in the heating and foaming step can be suitably determined according to the desired foaming. A temperature of 50 to 200°C is preferable for producing microcells.

In the case of producing a single foam as shown in Fig. 2, although a sheet material for forming can be used repeatedly, there are cases in which the sheet material becomes deteriorated by repeated irradiation with the active energy beam. In such cases, the forming sheet material can be replaced with a new one in accordance with the degree of deterioration, or the foamable composition can be irradiated with the active energy beam following separation. In the case of using a forming sheet material in the form of an endless belt as shown in Fig. 3, it is preferable to irradiate the foamable composition with the active energy beam following separation. As a result of being irradiated with the active energy beam, the foamable composition foams in the heating step resulting in a foam sheet. The foam may be wound with a winder in a wound state, or it may directly cut into sheets.

An example of an extrusion molding method is shown in Fig. 4. Examples of extrusion molding methods include ordinary extrusion forming using a screw-shaped extrusion shaft, and ram extrusion forming using a piston-shaped extrusion shaft. The foamable composition extruded from an extrusion forming machine 7 is extruded from a T die 8, formed into a sheet on a roller 9, and after being separated from the roller 9, is irradiated with an electron beam in an electron beam irradiation apparatus 4 followed by heating and foaming with a heating apparatus 5. A resulting foam 6 is in the form of a foam sheet composed of a single foam resin. In an extrusion molding method, only the forming method differs from the coating method, while the remainder of the steps after the forming step are the same as those of coating methods. It is worth noting in the production of a foam that, since there are cases in which the foamable composition decomposes at a high temperature of, for example, 150°C or higher as a result of heating depending on the particular foamable composition, it is necessary to prevent a loss of net foaming performance of the foamable composition before the active energy irradiation and heating and foaming steps. Particularly in an extrusion molding method, when the resin is heated and melted to a preferable viscosity, a loss of foaming performance may be caused. In that case, a method can be used in which a liquid foamable composition containing an active energy beam-cured monomer is cast into the shape of a sheet at room temperature followed by irradiating with the active energy beam, curing and forming. In addition, a solution of a foamable composition can be prepared using a solvent in the same manner as coating methods followed by forming at room temperature. In this case, it is necessary to provide a drying step after the forming step. Solvents can be removed in the drying step by using a heating roller or installing the roller itself within a drying apparatus. A foam sheet produced in this manner may also be laminated with another sheet and so forth in a subsequent step.

Although the following provides a description of characteristics relating to cell diameter and thickness along with application examples of a foam sheet produced using the process of the present invention, the present invention is not limited by these. The process of the present invention enables a foam sheet having a cell diameter of 10 $\mu$m or

less and thickness of about 50 μm to be obtained easily, and this foam can be used in various applications.

Light Reflection, Whitening and Masking:

The present invention allows a foam sheet to be produced easily that has a cell diameter on the sub-micron order (0.1 to 1 μm). Foams like these having a cell diameter roughly equal to the wavelength of visible light are known to cause Mie scattering that exhibits strong light scattering. It is possible to produce a sheet of a thickness of 50 μm or less having high reflectance, high whiteness and high masking properties as a result of optimizing the cell diameter. Examples of applications of highly reflective, white sheets include liquid crystal backlighting reflectors, medical, photographic and liquid crystal light box reflectors, planar light source reflectors, lighting reflectors such as fluorescent lamps, incandescent lamps and the like, internal-illuminating display fixture and electric signboard materials, road sign materials, sticker materials and blind materials. Examples of applications of high-masking white sheets include masking labels, light-blocking containers, agricultural light-blocking films, masking corrective transfer tape materials, high-masking base materials for thin delivery forms, posters, card materials, support materials of information recording paper (heat-sensitive and pressure-sensitive recording paper, electronic photographic paper, sublimable-dye receiving paper paper and ink jet receiving paper), packaging materials, bar code labels, bar code printer image receiving paper, maps, dust-free paper, display panels, white boards, electronic white boards, printing paper, cosmetic paper, wallpaper, paper currency, exfoliate paper, origami, calendars, tracing paper, paper forms, delivery forms, pressure-sensitive recording paper, copying paper and clinical test paper.

Wavelength Selective Reflection and Transmission:

Since the production process of a foam sheet of the present invention makes it possible to control cell diameter from the sub-micron order to the micron order (1 to 10 μm), foam films are obtained that transmit and reflect light by selecting specific wavelength components. These films can be used for agricultural multi-films, sun-blocking films (which may be affixed to car windows and building glass) and so forth. For example, as the agricultural multi-films, ones having spectral transmittance characteristics that allow the passage of light of the infrared range having a long wavelength but do not allow the passage of light of the visible range are preferable, and can be used to inhibit the growth of weeds (weed-inhibiting function), raise the ground temperature (ground temperature-elevating function), or drive off insects with reflected light (pest-controlling function). In addition, a new warming function can also be added by enhancing wavelength selectivity by foaming.

Heat insulating and Heat Blocking Functions:

A foam sheet of the present invention can be used to impart heat insulating and heat blocking to window glass, wall surfaces and so forth of buildings and automobiles if used in combination with heat insulating and blocking materials such as heat insulating packaging materials, heat insulating containers, tackiness agents and adhesives. Since it is able to impart heat insulating properties at a thickness of only several tens of micrometers in the form of a coated layer in particular, it can also be used as a heat insulating support or heat insulating layer of highly sensitive heat-sensitive recording paper and thermal transfer recording paper. The surface of the foam having a cell diameter on the sub-micron order demonstrates high smoothness and high gloss, making it preferable as a heat insulating layer of recording paper required to have smoothness and gloss.
In addition, with respect to thermal conductivity, foam having a cell diameter that approaches the mean free path of 65 nm of air at normal pressure demonstrates a remarkable decrease in thermal conductivity of the air particularly in the case of cells having a cell diameter of 10 to 100 nm. This makes it possible to obtain ultra-heat insulating properties that are unable to be achieved with conventional foams.

Low Dielectric Constant Applications:

Recent requirements of high-speed arithmetic processing, large-capacity, high-speed communications, portability and mobility in the field of computers and communication equipment have made it necessary for insulating materials to have lower dielectric strength constants, reduced size, thinner design and lighter weight. A foam sheet of the present invention allows the obtaining of a thin foam offering a low dielectric constant and light weight. Moreover, since independent cells can also be obtained, increases in the dielectric constant caused by moisture can be inhibited. Thus, it is suitable for low dielectric strength electronics materials such as IC card base sheets, dielectric sheets for wiring boards, low dielectric constant foam seals for electronic equipment, and low dielectric strength electronics materials such as LSI inter-insulating films. A cell diameter of about 10 nm to 1 μm is preferable for these applications.

Foam Structure of Light Reflectors:

In order to obtain thin foams, a mean cell diameter of 0.005 to 10 $\mu$m is typically preferable.

When the mean cell diameter is less than 0.005 $\mu$m, it may become difficult to demonstrate the function of a foam, while when it exceeds 10 $\mu$m, there is the risk of inadequate smoothness of the foam surface. In order for a light reflector to demonstrate adequate light reflection in the visible light range, the mean cell diameter is preferably 0.01 to 10 $\mu$m. Moreover, in order to obtain a foam that improves strength, heat insulating and other properties in the proper balance, a mean cell diameter of 0.01 to 5 $\mu$m is more preferable.

Porosity is preferably 5% to 90%. When the porosity is lower than 5%, adequate light reflectance may not be obtained, while when the porosity exceeds 90%, foam deformation may increase resulting in unevenness in light reflectance. A porosity of 25% to 70% is more preferable to obtain a proper balance between high light reflectance and foam smoothness.

When applying the technology of the present invention to a light reflector, there are no particular limitations on the form or molding method of the light reflector, and it may be in the form of, for example, a square block, sphere, rod, curved surface, sheet or film.

As an example of the production of a light reflector in the form of a sheet or film, a method in which a coating liquid containing a foamable composition is coated onto a support or a method in which it is melted and molded into a film is useful. The support may be a rod, flat surface and/or curved surface, and a foam structure is formed by coating a coating liquid containing a foamable composition onto the support for form a coated layer, irradiating this coated layer with an active energy beam and then subjecting to heat treatment to form the foam structure in the coated layer.

The thickness of the light reflector is preferably 10 to 500 $\mu$m. When the thickness is less than 10 $\mu$m, there may be the possibility of inadequate foaming, while when the thickness exceeds 500 $\mu$m, there may be the possibility of unevenness occurring in the foam internal structure. A light reflector of the present invention can be made to have a thickness of 100 $\mu$m or less in particular.

Light Reflectance:

The light reflectance of a light reflector of the present invention is preferably such that the mean light reflectance relative to incident light within a wavelength range of 320 to 800 nm is 80% or more in the case of using for the backlighting unit and so forth of a liquid crystal display.

Applications of Light Reflectors:

A light reflector of the present invention can be used as a light reflecting member of an apparatus having a built-in light source selected from the group consisting of the backlighting unit of a liquid crystal display, internal-illuminating lighting fixture, internal- illuminating electric signboard, light box, projection screen, medical X-ray observation panel, photocopier, projector-type display, facsimile and electronic blackboard. With respect to the backlighting units of liquid crystal displays in particular, the light reflector of the present invention can be used as a light reflector that surrounds a lamp holder within the backlighting unit or a light reflector that is located below a light guide plate.

Moreover, a light reflecting apparatus using the light reflector can also be fabricated. For example, a light reflecting apparatus can be produced by incorporating a light reflecting sheet of the present invention below a light guide plate and incorporating a light diffusing sheet above the light guide plate, incorporating a light source on at least one side of a laminate in which a lens sheet is incorporated on the surface of the light diffusing sheet, and covering the light source with a lamp holder formed to have a curved surface.

Surface Treatment of Light Reflector:

A light reflector of the present invention can be surface-treated and laminated. Examples are indicated below.

1. A light reflector of the present invention may be surface-treated to eliminate the harmful effects of bright light in which a linear light source becomes brighter locally in close proximity to the light source. For example, black ink may be printed where bright light occurs. In addition, a readily adhered layer may also be provided on the surface of the light reflector to facilitate printing.

2. The reflecting surface of a light reflector of the present invention can be surface-treated to prevent discoloration or deterioration caused by the effects of heat and ultraviolet rays generated from a light source. For example, a transparent resin layer containing an ultraviolet absorbent can be provided onto the reflecting surface. A direct reflecting layer such as a silver mirror or a white ink layer on its surface may be provided on the surface of the light reflector of the present invention. As a result, light for which there is the possibility of escaping by passing through the light reflector is reflected by the direct reflecting layer or white ink to further enhance light reflection efficiency.
3. A light reflector of the present invention can be provided with microscopic projections on the reflecting surface to uniformly reflect light.

Others:

Resin materials are separated for the purpose of recycling packaging materials in the field of packaging materials. Although one easy method for separation involves the use of differences in buoyancy relative to air or water and so forth, in the case of separating resin materials, it is difficult to separate based on differences in buoyancy since large enough differences in density cannot be obtained. It is particularly difficult to achieve differences in buoyancy in the case of films. In the present invention, since it is easy to produce a foam film, large differences in density can be achieved easily by foaming, thereby making it possible to create differences in buoyancy and facilitate separation from other resins. In addition, the characteristics of foam can also be used in soundproofing materials, sound-absorbing materials, cushioning materials, substance permeable membranes, filtration membranes, absorbents and catalyst carriers.

Examples

Although the following provides a more detailed explanation of the present invention through the following examples, the present invention is not limited by these examples. In addition, unless specifically stated otherwise, the terms "parts" and "%" used in the examples refer to "parts by mass" and "percent by mass", respectively.

<Example 1>

(1) Preparation of a Coating Liquid of a Foamable Composition
A foam sheet was produced in the following manner. 3 parts of an iodonium salt-based acid generator in the form of bis (4-tert-butylphenyl) iodonium perfluorobutane sulfonate (trade name: BBI-109, manufactured by Midori Kagaku) were mixed with 100 parts of a copolymer of tert-butylacrylate / methyl methacrylate (weight ratio: 60/40) used as a decomposing compound, followed by dissolving in ethyl acetate to prepare a solution having a solid content of 25% which was used as a coating liquid. This coating liquid was coated onto one side of a support composed of transparent polyethylene terephthalate (trade name: Lumirror 75-T60, manufactured by Panac) having a thickness of 75 $\mu$m using an applicator bar having a gap width of 150 $\mu$m. Subsequently, the solvent was removed by evaporation by allowing to stand for 1 minute in a constant temperature dryer at 100°C. A thin film-like, colorless and transparent coated layer was formed on the polyethylene terephthalate support. The thickness of the coated layer was 35 $\mu$m.
(2) Electron Beam Irradiation
The coated layer formed by step (1) above was irradiated with an electron beam under conditions of an acceleration voltage of 200 kV, absorbed dose of 9 Mrad and oxygen concentration of 500 ppm or less. The resulting coated layer remained colorless and transparent similar to the coated layer obtained after step (1) .
(3) Foaming by Heat Treatment
The coated layer obtained by step (2) was separated from the support and able to be foamed by subjecting to heat treatment by heating for 2 minutes at 110°C in a hot air oven. At this time, the coated layer changed from a colorless and transparent layer to a white layer and a foam resin layer was formed. Namely, a foam resin layer in the form of a thin film having microcells was able to be formed.
A cross-section of the resulting foam resin layer was observed to check its foam structure. Namely, the coated resin layer was separated from the support before and after foaming, the sample was sliced after freezing in liquid nitrogen, gold deposition was carried out on the resulting cross-section of the resin layer, and this gold-deposited cross-section was observed using a scanning electron microscope (trade name: S-510, manufactured by Hitachi, Ltd.) to check the cross-sectional structure of the foam.

<Evaluation of Foam Structure>

The foam thickness and mean cell diameter were determined from the cross-sectional structure, while the foam expansion ratio was determined by measuring density. The foam thickness was measured from cross-sectional images observed with the aforementioned electron microscope (magnification: 2500-fold) before and after heating and foaming. Cell diameter was determined by randomly selecting 100 cells from observed images of the foam resin layer cross-section (magnification: 5000-fold) and determining the mean of their diameters. Foam expansion ratio was determined by measuring the density of the foam at room temperature using the Archimedes method (A) and the density when the foam was dissolved in a solvent followed by being reformed into a film without being foamed (B), and then dividing B by A (B/A). The resulting foam thickness, cell diameter and foam expansion ratio are shown in Table 1.

Table 1 Foam Structure of Foam Film of Example 1

| Foam thickness ($\mu$m) | Cell diameter ($\mu$m) | Foam expansion ratio |
|---|---|---|
| 40 | 0.3 | 1.5 |

The whiteness, opacity, light reflection spectrum and light transmission spectrum were investigated for the resulting foam.

<Whiteness and Opacity>

Whiteness and opacity were measured in accordance with JIS P 8148 and JIS P 8149 using the SC-10WN Spectro Whiteness Color Meter (manufactured by Suga Test Instruments CO., LTD.) . Those results are shown in Table 2. Although the unfoamed film was colorless and transparent, foaming resulted in a film having high whiteness and high masking.

Table 2 Whiteness and Opacity of Foam Film

| Whiteness | Opacity |
|---|---|
| 92 | 90 |

<Measurement of Reflection Spectrum>

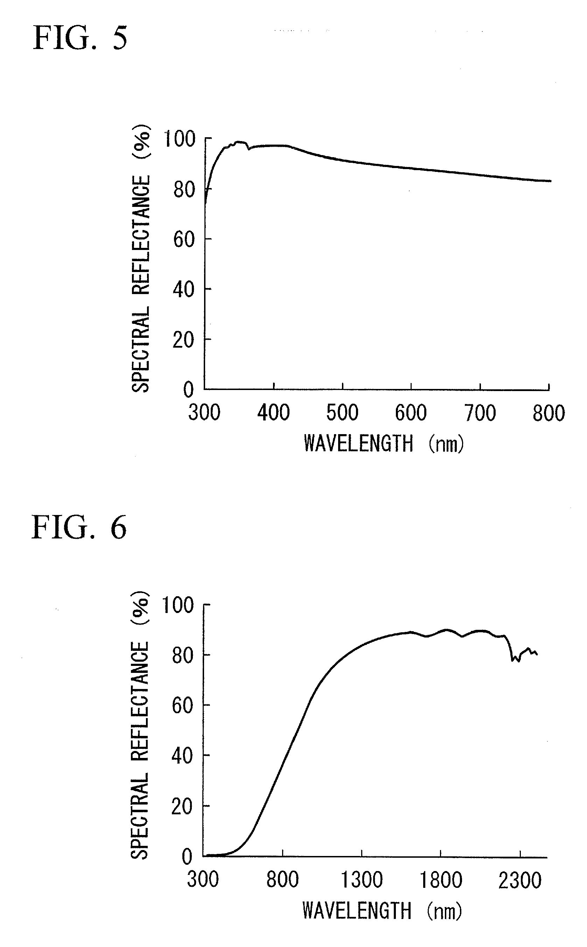

Spectral reflectance was measured using the integrating sphere jig of the UV-3100PC spectrophotometer (manufactured by Shimadzu Corporation) followed by determination of the relative reflectance (%) with respect to a standard plate (barium sulfate plate). Those results are shown in Fig. 5. Although the unfoamed product was transparent and exhibited zero reflectance, it exhibited high reflectance even in the form of a thin film having a thickness of 40 $\mu$m as a result of microcellular foaming.

<Measurement of Transmission Spectrum>

Spectral transmittance was measured using the jig for measurement of transmission spectrum of the UB-3100PC spectrophotometer (manufactured by Shimadzu Corporation). Those results are shown in Fig. 6. As a result of foaming the film that was transparent in the unfoamed state, the foaming film demonstrated wavelength selectivity that blocked visible light and allowed the transmission of infrared light.

<Example 2>

A foam sheet in the form of a thin film having microcells was produced in the same manner as Example 1. However, it was heated for 2 minutes at 120°C in a hot air oven in step (3) of Example 1.
The results of determining foam thickness, cell diameter and foam expansion ratio in the same manner as Example 1 are shown in Table 3. A thin foaming film having high foam expansion ratio was able to be obtained that was difficult to realize in the prior art.

Table 3 Foam Structure of Foam Film of Example 2

| Foam thickness ($\mu$m) | Cell diameter ($\mu$m) | Foam expansion ratio |
|---|---|---|
| 60 | 2 | 9.1 |

<Measurement of Thermal Conductivity>

The thermal conductivity $\lambda$ of the film before and after foaming was determined using the equation below from the measured values of thermal diffusivity $\alpha$, density $\rho$ and specific heat Cp.

$$\lambda \ = \ \alpha \cdot \rho \cdot Cp$$

Thermal diffusivity $\alpha$ was measured using a thermal diffusivity measuring apparatus based on the alternating current heating method (cf. International Journal of Thermophysics, Vol. 18, No. 2, p. 505-513 (1997)). Specific heat Cp was measured using the DSC-220 Differential Scanning Calorimeter and TA-Station-SSC5200 (manufactured by Seiko Instruments Inc.) and using a sapphire for the standard sample. Those results are shown in Table 4. Thermal conductivity decreased considerably as a result of foaming, and a thin film having high heat-insulation was obtained.

Table 4 Thermal Conductivity (at 30°C)

|  | Thermal conductivity (W/mK) |
|---|---|
| Film before foaming | 0.17 |
| Film after foaming | 0.031 |

Measurement of Dielectric Constant:

Specific dielectric constants before and after foaming were measured in an atmosphere of 27°C and 65% RH using a molecular orientation analyzer (MOA-3020A) manufactured by Oji Scientific Instruments. Those results are shown in Table 5. The dielectric constant decreased considerably as a result of foaming, and a low dielectric constant film was obtained.

Table 5 Specific Dielectric Constant (at 27°C, 65% RH)

|  | Specific dielectric constant |
|---|---|
| Film before foaming | 2.4 |
| Film after foaming | 1.2 |

<Example 3>

A foam sheet in the form of a thin film having microcells was produced in the same manner as Example 1. However, a copolymer of tert-butyl acrylate (20% by weight), tert-butyl methacrylate (37% by weight) and methyl methacrylate (43% by mass) was used instead of the poly(tert-butyl acrylate / methyl methacrylate (60 / 40)) used for the decomposing compound in step (1) of Example 1. In addition, ultraviolet light was used instead of the electron beam used for the active energy beam in step (2) of Example 1. This ultraviolet light was irradiated using an ultraviolet irradiation apparatus (manufactured by USHIO INC.) equipped with a Y-ray lamp (of which peak wavelength is 214 nm) at an irradiated dose of 3000 mJ/cm$^2$, followed by heating for 2 minutes at 120°C in a hot air oven in step (3) of Example 1. At this time, the coated layer changed from a colorless, transparent layer to a white layer in the same manner as Example 1, and a foam sheet was able to be formed having a foam thickness of 50 $\mu$m, cell diameter of 0.5 $\mu$m and foam expansion ratio of 1.2.

<Example 4>

Example of Light Reflector

<Production of Foam Sheet>

(1) Formation of Coated Layer
3 parts of an iodonium salt-based acid generator in the form of bis (4- tert-butylphenyl) iodonium perfluorobutane sulfonate (trade name: BBI-109, manufactured by Midori Kagaku Co., Ltd.) were mixed with 100 parts of poly(tert-butylacrylate) used as a decomposing compound, followed by dissolving in ethyl acetate to prepare a solution having a solid content of 25% which was used as a coating liquid. This coating liquid was coated onto one side of a support composed of transparent polyethylene terephthalate (trade name: Lumirror 75-T60, manufactured by PANAC CO.,

LTD.) having a thickness of 75 $\mu$m using an applicator bar having a gap width of 300 $\mu$m for coating. Immediately following coating, the solvent was removed by evaporation by allowing to stand for 10 minutes in a constant temperature dryer at a temperature of 80°C. A thin film-like, colorless and transparent coated layer was formed on the polyethylene terephthalate support. The thickness of the coated layer was within the range of 40 to 50 $\mu$m.

(2) Electron Beam Irradiation

The coated layer formed by step (1) above was irradiated with an electron beam under conditions of an acceleration voltage of 175 kV, absorbed dose of 16 Mrad and oxygen concentration of 500 ppm or less. The resulting coated layer remained colorless and transparent similar to the coated layer obtained after step (1).

(3) Foaming by Heat Treatment

The coated layer obtained by step (2) was able to be foamed by subjecting to heat treatment by allowing to stand for 2 minutes in a constant temperature incubator maintained at a temperature of 100°C. At this time, the coated layer changed from a colorless, transparent layer to a white layer and a foam resin layer was formed. Namely, a foam resin layer in the form of a thin film having microcells was able to be formed. The thickness of this foam resin layer was 50 $\mu$m, and a single foam sheet was able to be obtained by separating from the support.

<Evaluation of Foam Structure>

The foam thickness and mean cell diameter were determined from the cross-sectional structure, while the foam expansion ratio was determined by measuring density. The foam thickness was measured from cross-sectional images observed with the aforementioned electron microscope (magnification: 2500-fold) before and after heating and foaming (the observed cross-sections were obtained by slicing the foam after freezing in liquid nitrogen and carrying out gold deposition on the resulting cross-section of the resin layer). Cell diameter was determined by randomly selecting 100 cells from observed images of the foam resin layer cross-section (magnification: 5000-fold) and determining the mean of their diameters. Foam expansion ratio was determined by measuring the density of the foam at room temperature using the Archimedes method (A) and the density when the foam was dissolved in a solvent followed by being reformed into a film without being foamed (B), and then dividing B by A (B/A). The resulting foam thickness, cell diameter and foam expansion ratio are shown in Table 6.

<Evaluation of Physical Properties>

(1) Evaluation of Reflection Spectrum

The light reflectance of the resulting foam was measured. Spectral reflectance was measured at 550 nm wavelength in compliance with Measurement Method B of JIS-K7105 using the integrating sphere jig of the UV-3100PC spectrophotometer (manufactured by Shimadzu Corporation) followed by determination of the relative reflectance (%) with respect to a standard plate (barium sulfate plate). Those results are shown in Fig. 5. Although the unfoamed product was transparent and exhibited zero reflectance, it became white as a result of microcellular foaming and exhibited high reflectance of 80% or more even in the form of a thin film having a thickness of about 50 $\mu$m.

(2) Film Strength

The foam was folded at an angle of 90 degrees and evaluated for the presence of folding lines and cracking. It was evaluated with ○ when there were no folding lines present, and with × when there were folding lines present or when the foam was brittle causing it to crack.

<Example 5>

A foam sheet in the form of a thin film having microcells was produced in the same manner as Example 4. However, a copolymer of tert-butyl acrylate (60% by weight) and methyl methacrylate (40% by mass) was used instead of the poly (tert-butyl acrylate) used for the decomposing compound in step (1) of Example 4. In addition, the coated layer was heated for 2 minutes at 110°C instead of 2 minutes at 100°C in step (3). The test results are shown in Table 6. The coated layer became white as a result of microcellular foaming, and demonstrated high reflectance even in the form of a thin film.

<Example 6>

A foam sheet in the form of a thin film having microcells was produced in the same manner as Example 5. However, ultraviolet light was used instead of the electron beam for the active energy beam in step (2) of Example 4. This ultraviolet light was irradiated using an ultraviolet curing system (manufactured by EYEGRAPHICS co., ltd.) equipped with a 120 w/cm, long arc lamp-type high-pressure mercury lamp at an irradiated dose of 1100 mJ/cm$^2$. The test results are shown in Table 6. The coated film became white as a result of microcellular foaming, and demonstrated high reflectance even in the form of a thin film.

<Example 7>

A foam sheet in the form of a thin film having microcells was produced in the same manner as Example 4. However, a copolymer of tert-butyl acrylate (20% by weight), tert-butyl methacrylate (37% by weight) and methyl methacrylate (43% by weight) was used instead of the poly(tert-butyl acrylate) used for the decomposing compound in step (1) of Example 1. In addition, ultraviolet light was used instead of the electron beam for the active energy beam in step (2) of Example 1. This ultraviolet light was irradiated using an ultraviolet irradiation apparatus (manufactured by USHIO INC.) equipped with a Y-ray lamp (of which peak wavelength is 214 nm) at an irradiated dose of 3000 mJ/cm$^2$. The test results are shown in Table 6. The coated film became white as a result of microcellular foaming, and demonstrated high reflectance even in the form of a thin film.

<Comparative Example 1>

The procedure was carried out in the same manner as Example 4. However, polyethylene, which is not a decomposing compound, was used instead of the poly (tert-butyl acrylate) used for the decomposing compound in step (1) of Example 4, and a mixture in which 3 parts of bis(4-tert-butylphenyl) iodonium perfluorobutane sulfonate (trade name: BBI-109, manufactured by Midori Kagaku Co., Ltd.) were kneaded in 100 parts of this polyethylene was used for the coating liquid. However, a foam sheet was unable to be obtained and there was no light reflectance. The test results are shown in Table 6.

<Comparative Example 2>

10 parts of a foaming agent in the form of carbon dioxide were impregnated for 10 hours at a pressure of 5.5 MPa into 100 parts of PET resin and extruded to be molded into a sheet to a thickness of 50 $\mu$m. Subsequently, although the sheet was heated for 0.5 minutes at 150°C under normal pressure, a foam sheet was unable to be produced and there was hardly any reflectance. The test results are shown in Table 6.

<Comparative Example 3>

Although 70 parts of precipitated barium sulfate and 3 parts of hardened castor oil were mixed into 30 parts of PET resin and foamed by uniaxial draw-foaming to a foam sheet thickness of 50 $\mu$m, drawability was poor and foaming was inadequate due to the large amount of pigment, and adequate light reflectance was unable to be obtained. The test results for reflectance are shown in Table 6.

<Comparative Example 4>

A coating liquid in which 50 parts of hollow particles and 10 parts of polyvinyl alcohol were mixed into 100 parts of acrylate copolymer was coated onto one side of a transparent support comprised of polyethylene terephthalate to a thickness of 50 $\mu$m followed by drying to obtain a foam film. However, the film demonstrated poor film forming properties and inadequate reflectance. The test results are shown in Table 6.

Table 6

| | Film thickness ($\mu$m) | Foam structure | | Physical properties | |
|---|---|---|---|---|---|
| | | Cell diameter ($\mu$m) | Foam expansion ratio | Light reflectance (%) | Film strength |
| Example 4 | 50 | 1.1 | 1.5 | 83 | ○ |
| Example 5 | 60 | 2.3 | 1.7 | 81 | ○ |
| Example 6 | 40 | 0.4 | 1.5 | 99 | ○ |
| Example 7 | 45 | 0.5 | 1.2 | 97 | ○ |
| Comp. Ex. 1 | 50 | -- | 1.0 | 0 | ○ |

Table continued

| | Film thickness ($\mu$m) | Foam structure | | Physical properties | |
|---|---|---|---|---|---|
| | | Cell diameter ($\mu$m) | Foam expansion ratio | Light reflectance (%) | Film strength |
| Comp. Ex. 2 | 50 | -- | 1.0 | 0 | ○ |
| Comp. Ex. 3 | 50 | 1.5 | 2.8 | 90 | × |
| Comp. Ex. 4 | 50 | 3 | 3.3 | 77 | × |

In Examples 4 to 7, which used a combination of an acid generator and an acrylate decomposing compound having a tert-butyl group, light reflectors were able to be produced having high light reflectance of 80% or more even when in the form of thin films having a thickness of up to 50 $\mu$m.

On the other hand, in Comparative Example 1, which used a non-decomposing compound in the form of polyethylene, and Comparative Example 2, in which an inert gas was impregnated and saturated into PET resin, foams were unable to be produced and light reflectance was unable to be obtained. In addition, although a foam was obtained in Comparative Example 3, in which polypropylene containing an inorganic pigment was drawn, the film strength was poor, while in Comparative Example 4, in which the hollow particles were contained in the resin, light reflectance was inadequate.

INDUSTRIAL APPLICABILITY

A foam sheet produced from a foamable composition containing an acid generator that generates acid or a base generator that generates base due to the action of an active energy beam, and containing a compound having decomposing foamable functional group that decomposes and eliminates at least one type of low boiling point volatile substance by reacting with acid or base, makes it possible to obtain a microcellular thin foam that was considered to be difficult to produce thus far, thereby greatly expanding the range of fields in which foams can be used and significantly contributing to industry.

**Claims**

1. A production process of a foam sheet comprising: a step in which a foamable composition, containing an acid generator that generates an acid or a base generator that generates a base due to an action of an active energy beam, and containing a compound that has a decomposing foamable functional group that decomposes and eliminates one or more types of low boiling point volatile substances by reacting with the acid or base, is formed into the shape of a sheet; and a step in which the sheet is subsequently irradiated with an active energy beam.

2. A production process of a foam sheet according to claim 1, further comprising a heating and foaming step.

3. A production process of a foam sheet according to claim 1, wherein a foamable composition, containing an acid generator that generates an acid or a base generator that generates a base due to an action of an active energy beam, and containing a compound that has a decomposing foamable functional group that decomposes and eliminates one or more types of low boiling point volatile substances by reacting with the acid or base, is formed into the shape of a sheet, and the foamable composition formed into the shape of a sheet is foamed by heating as necessary and then irradiating with an active energy beam.

4. A production process of a foam sheet according to claim 1, wherein the step in which the foamable composition is formed into the shape of a sheet is an extrusion forming step.

5. A foam sheet formed according to any one of the processes according to claim 1 to 4 having a thickness of 1 $\mu$m to 10 mm, and a mean cell diameter of 0.005 to 10 $\mu$m.

FIG. 1

FIG. 2

# FIG. 3

# FIG. 4

# FIG. 5

# FIG. 6

**EP 1 647 570 A1**

## INTERNATIONAL SEARCH REPORT

| International application No. |
|---|
| PCT/JP2004/010575 |

**A. CLASSIFICATION OF SUBJECT MATTER**
Int.Cl$^7$ C08J9/02, 9/06

According to International Patent Classification (IPC) or to both national classification and IPC

**B. FIELDS SEARCHED**

Minimum documentation searched (classification system followed by classification symbols)
Int.Cl$^7$ C08J9/02, 9/06, 7/04, B32B5/18, C09D5/00

Documentation searched other than minimum documentation to the extent that such documents are included in the fields searched

| | | | |
|---|---|---|---|
| Jitsuyo Shinan Koho | 1926–1996 | Jitsuyo Shinan Toroku Koho | 1996– |
| Kokai Jitsuyo Shinan Koho | 1971– | Toroku Jitsuyo Shinan Koho | 1994– |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 8-325401 A (Sekisui Chemical Co., Ltd.),<br>10 December, 1996 (10.12.96),<br>Claims<br>(Family: none) | 1-5 |
| A | JP 8-62811 A (Fuji Photo Film Co., Ltd.),<br>08 March, 1996 (08.03.96),<br>Claims; Par. Nos. [0010], [0049]<br>(Family: none) | 1-5 |
| A | JP 4-185656 A (Fujikura Densen Kabushiki<br>Kaisha),<br>02 July, 1992 (02.07.92),<br>Claims<br>(Family: none) | 1-5 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07 September, 2004 (07.09.04) | Date of mailing of the international search report<br>21 September, 2004 (21.09.04) |
|---|---|
| Name and mailing address of the ISA/<br>Japanese Patent Office | Authorized officer |
| Facsimile No. | Telephone No. |

Form PCT/ISA/210 (second sheet) (January 2004)

| International application No. |
| --- |
| PCT/JP2004/010575 |

C (Continuation).    DOCUMENTS CONSIDERED TO BE RELEVANT

| Category* | Citation of document, with indication, where appropriate, of the relevant passages | Relevant to claim No. |
| --- | --- | --- |
| P,X | JP 2004-2812 A  (Oji Paper Co., Ltd.),<br>08 January, 2004 (08.01.04),<br>Claims; Par. Nos. [0051] to [0052]<br>(Family: none) | 1-5 |
| P,X | JP 2004-43732 A  (3M Innovative Properties Co.),<br>12 February, 2004 (12.02.04),<br>Claims; Par. Nos. [0007], [0041] to [0049]<br>(Family: none) | 1-5 |
| P,X | JP 2004-66638 A  (Oji Paper Co., Ltd.),<br>04 March, 2004 (04.03.04),<br>Claims; Par. Nos. [0012], [0017]<br>(Family: none) | 1-5 |

Form PCT/ISA/210 (continuation of second sheet) (January 2004)